# EUROPEAN PATENT SPECIFICATION

(11) **EP 1 521 667 B1**
(45) Date of publication and mention of the grant of the patent: **23.11.2005**
(21) Application number: 03721154.7
(22) Date of filing: 15.04.2003
(51) Int. Cl.: B29C 45/17

(54) **ALIGNING MEANS FOR AN INJECTION-MOLDING DEVICE**
AUSRICHTUNGSMITTEL FÜR EINE SPRITZGIESSVORRICHTUNG
MOYENS D'ALIGNEMENT DESTINES A UN DISPOSITIF DE MOULAGE PAR INJECTION

(30) Priority: 12.07.2002 NL 1021064
(43) Date of publication of application: 13.04.2005
(73) Proprietor: F.T. Engineering B.V., 5674 CD Nuenen (NL)
(72) Inventor: KRUIDERING, Ralph, NL-5266 AC Cromvoirt (NL)
(74) Representative: van Westenbrugge, Andries
(86) International application number: PCT/NL2003/000286
(87) International publication number: WO 2004/007168

(56) References cited:
- EP-A- 0 835 731
- WO-A-95/04643
- PATENT ABSTRACTS OF JAPAN vol. 13, no. 220 (E-762), 23 May 1989 (1989-05-23) & JP 01 031428 A (MITSUBISHI ELECTRIC CORP), 1 February 1989 (1989-02-01)

## Description

The present invention relates to an injection-molding device and to a mold part provided with aligning means.

The construction described above can be used both for injection-molding devices with the mold parts secured rigidly, in which case in practice corrections are constantly required, and when using injection-molding devices which are less rigid and in which the mold sections, during mold closure, seek one another out, thus providing a centering action. In both cases, the positioning of the mold sections with respect to a machine becomes less critical and may change and maintenance can be carried out more easily. After all, the mold sections are centered with respect to one another while the mold is being closed. In the case of less rigid constructions, the frame and associated structural parts can be of considerably simpler design. As a result, production costs will drop. Moreover, it is now easy to allow the device to operate, i.e. design it with a closure movement of the moveable mold section. This has advantages in certain cases when changing mold sections for injection-molding of different products (centering with respect to their receiving part) and during removal of products after injection-molding. Unlike with horizontally acting injection-molding devices, centering between the two mold parts is achieved by mutual displacement of the said mold parts with respect to the frame. Since the frame can be of non-rigid design, its construction can be relatively lightweight and compact. However, this means that high demands are imposed on the aligning means which act between a mold part and the frame.

The non-rigid connection between the actuating means and the moveable mold section may comprise any connection which is known in the prior art. This connection merely has to be rigid in the direction of closure. A spherical bearing is mentioned by way of example. If appropriate, this may be designed as a system with a ball both in the vicinity of the mold section and at the actuating means, with a double socket positioned therebetween. In this way, a double thrust bearing is formed, allowing tilting and slight movement in the horizontal plane (during a closure movement) of the moveable mold section with negligible friction.

WO 95/04643, EP 0835731 and patent abstracts of Japan 13, no. 220 (E-762), 23 May 1989 (1989-05-23) do not relate to a vertically operating injection molding machine.

The object of the present invention is to provide a non-rigid connection between one of the mold parts and the frame and/or the actuating means for opening and closing said mold part. This needs to be of simple design, in such a manner that there is no mutual displacement along metallic surfaces which is limited by friction, as is the case with thrust bearings.

This object is achieved with an injection-molding device comprising the features according to claim 1.

The above object is further achieved by the mold part as defined in claim 9.

Particular embodiments of the invention are the subject of the dependent claims.

The use of ribs which function as a hinge results in a low-friction construction which can bear high loads and with which it is possible for the relevant surfaces of two mold parts which are moving toward one another to be placed in precisely the correct position.

According to an advantageous embodiment, displacement in two directions which are perpendicular to one another is possible, and for this purpose there are two sets of ribs which extend perpendicular to one another, with an intermediate plate between them.

The cross section of the ribs halfway up them in a direction perpendicular to the axis of the injection-molding device may be constant. However, according to an advantageous embodiment of the invention, this is designed to converge toward the outer end of the mold. This convergence is preferably tapered. The outer boundary of the ribs is preferably a continuous line in order to avoid stresses as far as possible. More particularly, this line is part of a circular cylinder.

Designing the cross section of the ribs to converge toward the radial outer periphery results in the formation of a construction which can be subjected to relatively high loads and is not particularly rigid. If the ribs were to have a constant cross section over their radial extent, they would be more rigid for the same load-bearing capacity.

The aligning means described above can be used in combination with a number of columns which extend in the direction of displacement. These columns are arranged between the actuating means and the moveable part. The columns are rigid in the longitudinal direction, i.e. in the direction of displacement (high compressive strength) and weak in the transverse direction. The weakness can be implemented by arranging recesses, such as grooves, in the columns. As a result of a number of columns being arranged next to and parallel to one another, displacement of the bottom connecting surface with respect to the top connecting surface is possible, but the presence of the columns means that this movement is purely parallel, i.e. a type of parallelogram structure is formed. It has been found that if a larger number of columns is used, the overall "weakness" of the structure, i.e. its ability to move in the direction perpendicular to the direction of displacement, may increase. A number which is practical is four, but any other number may also be used.

The aligning means described above can be used in both a vertical injection-molding device and a horizontal injection-molding device.

It should be understood that the invention can also be used exclusively with the aligning means described above.

The invention will be described in more detail below with reference to an exemplary embodiment of the invention which is depicted in the drawing, in which:
Fig. 1 diagrammatically depicts a cross section through the injection-molding device according to the present invention with the actuating means in the molding position;
Fig. 2 shows the centering means shown in Fig. 1 in more detail; and
Fig. 3 shows a partially cut-away view of a variant of the centering means shown in Fig. 2.

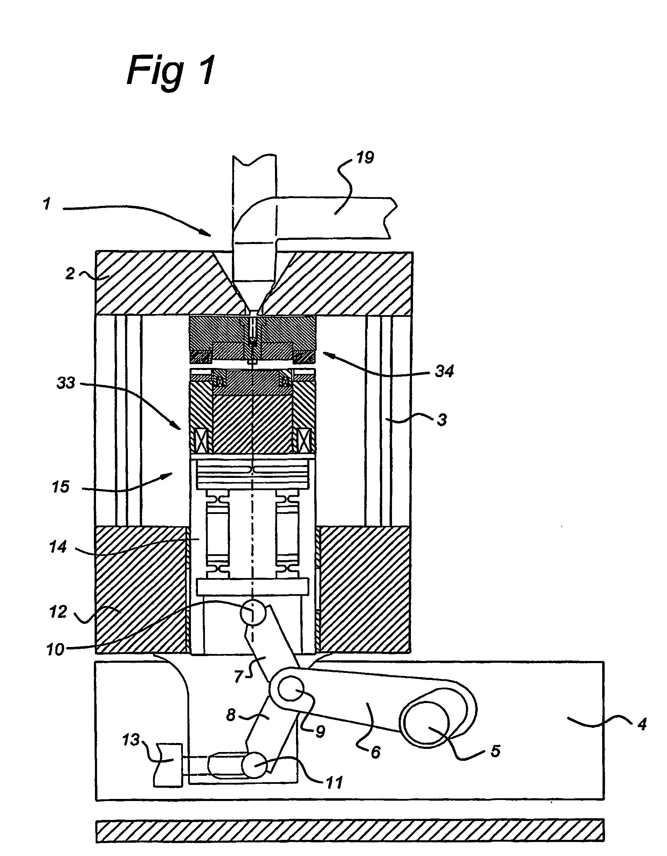

In Figure 1, the injection-molding device according to the invention is denoted overall by 1. It comprises an upper frame 2, which is connected, for example by means of three or four columns 3, to the base plate 4 in a relatively "weak" way. In the design shown here, the injection-molding device is arranged vertically, i.e. the mold sections move in the vertical direction with respect to one another.

The actuating means for the moveable mold section comprises a crankshaft 5 which is driven in some way by a motor and control unit, not shown in more detail. The crank of crankshaft 5 is connected to a drive rod 6 which, in the vicinity of its free end, is provided with a pivot 9, to which auxiliary rods 7 and 8 are pivotably secured. Auxiliary rod 7 is connected to pivot 10 of piston 14, while auxiliary rod 8 engages on pivot 11 on the end of the plunger rod of ram 13. In the position of the plunger rod of ram 13 which is shown in Fig. 1, the mold cavity can be completely closed, i.e. the mold sections can be moved completely together, by movement of crankshaft 5.

The moveable mold section 33 is connected, via a centering structure 15, to the piston 14 or other reciprocatingly driven part. This centering structure, which is used to ensure that the end face of mold section 33 which faces the mold section 34 comes to lie parallel to the end face of mold section 34 which faces mold section 33, comprises a plate 54 which is connected, in a manner which is not illustrated in more detail, to piston 14 (Fig. 1). Plate 58 is used to support mold section 33.

A number of (in this case four) columns 55 with a high compressive strength are arranged on plate 54. They are provided with recesses 61, 62 which always extend in horizontal directions. As a result, each of these columns is relatively weak in the transverse direction (as seen in the drawing). On the other side, these columns are connected to plate 56. This design allows high compressive forces to be transmitted from plate 54 to plate 56. Moreover, plate 56 can move laterally (as seen in the drawing) with respect to plate 54 but in doing so will always maintain the same orientation, i.e. if plates 54 and 56 are originally parallel, they will remain parallel in the event of any lateral movement. The use of a large number of columns 55 makes it possible to provide a relatively weak structure, making it possible to provide for adjustments of tenths of a millimeter.

If, in the starting position, there is an incorrect orientation with respect to the angular position, it is possible to arrange a plate 57 between plates 56 and 58. This plate 57 is always located at a distance from plates 56 and 58 and is connected thereto by a rib 59 or 60 which extends radially with respect to central opening 19. As a result of these ribs being arranged perpendicular to one another, a tilting movement in two perpendicular directions (x-y) is possible. It will be understood that the alternative described above to a thrust bearing can be used in combination with the thrust bearing or instead of it Moreover, it is possible to use only the columns and/or only the two plates 56, 57, 58 which can tilt with respect to one another.

In the embodiment shown here, the ribs 59, 60 arranged between the plates 56, 57 and 57, 58, respectively, have substantially the same dimension in the direction extending radially (with respect to the center axis 7). The plate 58 is provided with securing means for the mold section 63.

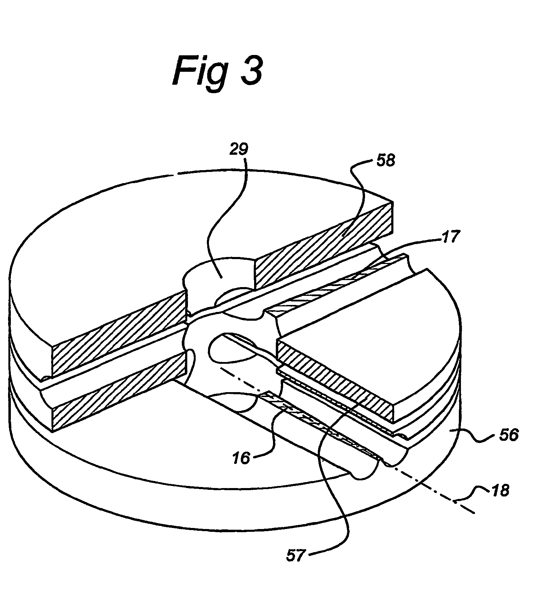

Fig. 3 shows a variant of the design of the ribs. For the sake of simplicity, in this figure the plates are once again denoted by 56-58 while the ribs bear reference numerals 16 and 17. They extend as far as opening 29.

It can be seen from this drawing that the cross-sectional plane of the ribs 16, 17 as seen in Fig. 3 decreases in the radial direction from the center of the plates 56-58. There are (partially) circular-cylindrical openings directly adjacent to the ribs.

Designing the ribs 16, 17 to taper in this way allows a uniform stress distribution to be produced in the material of the ribs in the event of deformation, since in the event of displacement of the centering structure, a higher stress will occur in the center than in the vicinity of the periphery.

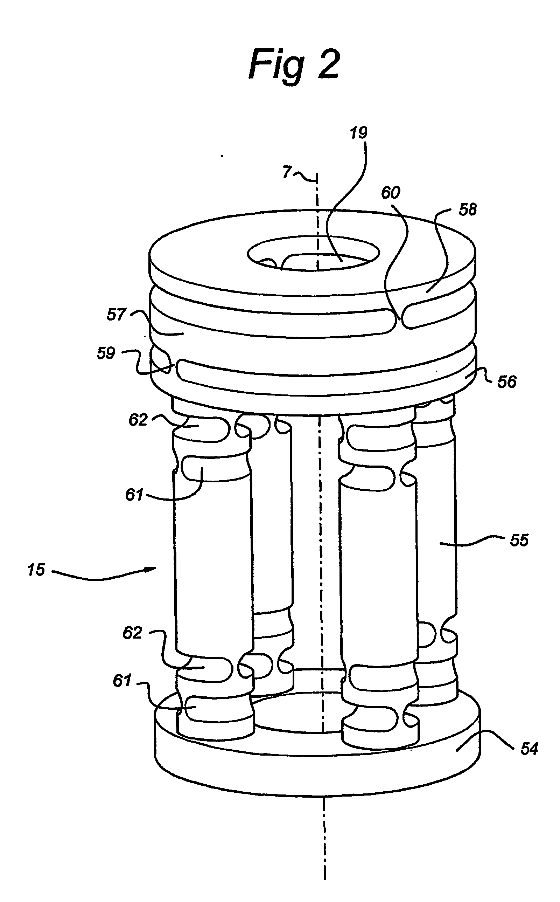

In this way, it is possible to obtain a much higher load-bearing capacity than with the design shown in Fig. 2 with ribs of constant cross section, while using the same rigidity. It has been found that an increase of 40% or more is possible.

To further increase the load-bearing capacity, the wall surface of the ribs 16, 17 is preferably designed to be as smooth as possible, which can be achieved, for example, by honing. The diameter of the circular-cylindrical opening adjoining the ribs should preferably be such that it does not cause any notch effect.

Although the invention has been described above with reference to a preferred embodiment, it will be understood that numerous modifications can be made to this embodiment without departing from the scope of the appended claims.

## Claims

1. Injection-molding device (1) comprising a frame which extends with a first mold part (34), which cannot be displaced along a vertical axis (7), on the top side or underside, and a second mold part (33), which can be displaced along a vertical axis (7), on the underside or top side, displacement means (5-11), which are arranged between the frame and the second mold part in order to displace the second mold part from and to the first mold part in order to carry out an injection-molding operation, aligning means (15) being arranged between the frame and a mold part in order to displace the free end face of the first mold part such that it bears flat against the free end face of the second mold part said aligning means comprising at least two ribs (16, 17; 59, 60) which lie in line with one another and extend perpendicularly and radially with respect to the vertical axis (7) in a plane, and which ribs are on the one hand connected to a mold part (33) and on the other hand connected to the frame or the displacement means, which ribs end at a central opening (19; 29).

2. Injection-molding device as claimed in claim 1, comprising two sets of ribs (16, 17; 59, 60), which extend perpendicular to one another and are connected by an auxiliary plate (57).

3. Injection-molding device as claimed in one of the preceding claims, in which, as seen in cross section perpendicular to the vertical axis (7) taken halfway up the ribs (15, 16), these ribs converge toward the radially outer side.

4. Injection-molding device as claimed in claim 3, in which said ribs taper.

5. Injection-molding device as claimed in one of the preceding claims, in which, as seen in cross section perpendicular to the radial axis (18) of said ribs (16, 17), the end boundary of said ribs is a continuous line.

6. Injection-molding device as claimed in claim 5, in which the said continuous line is a (part-)circle.

7. Injection-molding device as claimed in claim 5 or 6, in which the said ribs are delimited on either side by a circular cylinder.

8. Injection-molding device as claimed in one of the preceding claims, comprising a vertical injection-molding device with a vertically extending frame.

9. Mold part (33) provided with aligning means (15) being arranged on said mold part in order to displace the free end face of said mold part such that it is able to bear flat against the free end face of a further mold part, said aligning means comprising at least two ribs (16, 17; 59, 60) which lie in line with one another and extend perpendicularly and radially with respect to the vertical axis (7) in a plane, and which ribs are connected on the one hand to said mold part (33) and connected on the other hand to a frame or displacement means, which ribs end at a central opening (19, 29).

## Patentansprüche

1. Spritzgießvorrichtung (1), mit einem Rahmen, der sich entlang einem ersten Formteil (34), das nicht entlang einer vertikalen Achse (7) an der Oberseite oder an der Unterseite verschiebbar ist, und entlang einem zweiten Formteil (33) erstreckt, das entlang einer vertikalen Achse (7) an der Oberseite oder an der Unterseite verschiebbar ist, mit Verschiebeeinrichtungen (5 - 11), die zwischen dem Rahmen und dem zweiten Formteil angeordnet sind, um das zweite Formteil von dem ersten Formteil weg und zu diesem hin zu verschieben, um einen Spritzgießvorgang auszuführen, wobei Ausrichteinrichtungen (15) zwischen dem Rahmen und einem Formteil angeordnet sind, um die freie Endfläche des ersten Formteils derart zu verschieben, daß diese flach gegen die freie Endfläche des zweiten Formteils anliegt, wobei die Ausrichteinrichtungen mindestens zwei Rippen (16, 17; 59, 60) aufweisen, die in Ausrichtung miteinander angeordnet sind und sich senkrecht sowie radial in bezug auf die vertikale Achse (7) in einer Ebene erstrecken, wobei die Rippen einerseits mit einem Formteil (33) verbunden sind und andererseits mit dem Rahmen oder den Verschiebeeinrichtungen verbunden sind und wobei die Rippen an einer zentralen Öffnung (19; 29) enden.

2. SpritzgieBvorrichtung nach Anspruch 1,
die zwei Sätze von Rippen (16, 17; 59, 60) aufweist, die sich senkrecht zueinander erstrecken und mit einer Hilfsplatte (57) verbunden sind.

3. Spritzgießvorrichtung nach einem der vorangehenden Ansprüche,
wobei, bei Betrachtung im Querschnitt, senkrecht zu der vertikalen Achse (7) auf halbem Wege entlang der Rippen (15, 16) diese Rippen in Richtung radial nach außen konvergieren.

4. Spritzgießvorrichtung nach Anspruch 3,
wobei sich die Rippen verjüngen.

5. Spritzgießvorrichtung nach einem der vorangehenden Ansprüche,
wobei, bei Betrachtung im Querschnitt, senkrecht zu der radialen Achse (18) der Rippen (16, 17) die Endbegrenzung der Rippen in Form einer kontinuierlichen Linie vorliegt.

6. Spritzgießvorrichtung nach Anspruch 5,
wobei die kontinuierliche Linie (teil-)kreisförmig ausgebildet ist.

7. Spritzgießvorrichtung nach Anspruch 5 oder 6,
wobei die Rippen beidseits von einer Kreiszylinderform begrenzt sind.

8. Spritzgießvorrichtung nach einem der vorangehenden Ansprüche, die eine Vertikal-Spritzgießvorrichtung mit einem vertikal verlaufenden Rahmen aufweist.

9. Formteil (33), das mit Ausrichteinrichtungen (15) versehen ist, die an dem Formteil angeordnet sind, um die freie Endfläche des Formteils derart zu verschieben, daß sie flach in Anlage gegen die freie Endfläche eines weiteren Formteils bringbar ist, wobei die Ausrichteinrichtungen mindestens zwei Rippen (16, 17; 59, 60) aufweisen, die in Ausrichtung miteinander angeordnet sind und sich senkrecht sowie radial in bezug auf die vertikale Achse (7) in einer Ebene erstrecken, wobei die Rippen einerseits mit dem Formteil (33) verbunden sind und andererseits mit einem Rahmen oder Verschiebeeinrichtungen verbunden sind und wobei die Rippen an einer zentralen Öffnung (19, 29) enden.

## Revendications

1. Dispositif de moulage par injection (1) comprenant un cadre qui s'étend avec une première partie de moule (34), qui ne peut pas être déplacée le long d'un axe vertical (7), sur le côté supérieur ou le côté inférieur, et une seconde partie de moule (33), qui peut être déplacée le long d'un axe vertical (7), sur le côté inférieur ou le côté supérieur, des moyens de déplacement (5-11) qui sont agencés entre le cadre et la seconde partie de moule afin de déplacer la seconde partie de moule de et vers la première partie de moule afin de réaliser une opération de moulage par injection, des moyens d'alignement (15) étant agencés entre le cadre et une partie de moule afin de déplacer la face d'extrémité libre de la première partie de moule de telle sorte qu'elle vienne appuyer à plat contre la face d'extrémité libre de la seconde partie de moule, lesdits moyens d'alignement comprenant au moins deux nervures (16, 17 ; 59, 60) qui sont alignées l'une avec l'autre et s'étendent perpendiculairement et radialement par rapport à l'axe vertical (7) dans un plan, et lesquelles nervures sont d'une part connectées à une partie de moule (33) et d'autre part connectées au cadre ou aux moyens de déplacement, lesquelles nervures se terminent au niveau d'une ouverture centrale (19 ; 29).

2. Dispositif de moulage par injection selon la revendication 1, comprenant deux groupes de nervures (16, 17 ; 59, 60), qui s'étendent perpendiculairement les unes aux autres et sont connectées par une plaque auxiliaire (57).

3. Dispositif de moulage par injection selon l'une quelconque des revendications précédentes, dans lequel, comme on peut le voir dans la coupe transversale perpendiculaire à l'axe vertical (7) prise à la moitié des nervures (15, 16), ces nervures convergent vers le côté radialement extérieur.

4. Dispositif de moulage par injection selon la revendication 3, dans lequel lesdites nervures diminuent progressivement.

5. Dispositif de moulage par injection selon l'une quelconque des revendications précédentes, dans lequel, comme on peut le voir dans la coupe transversale perpendiculaire à l'axe radial (18) desdites nervures (16, 17), la limite d'extrémité desdites nervures est une ligne continue.

6. Dispositif de moulage par injection selon la revendication 5, dans lequel la ligne continue est un cercle (partiel).

7. Dispositif de moulage par injection selon la revendication 5 ou 6, dans lequel lesdites nervures sont délimitées des deux côtés par un cylindre circulaire.

8. Dispositif de moulage par injection selon l'une quelconque des revendications précédentes, comprenant un dispositif de moulage par injection vertical avec un cadre s'étendant verticalement.

9. Partie de moule (33) équipée de moyens d'alignement (15) agencés sur ladite partie de moule de manière à déplacer la face d'extrémité libre de ladite partie de moule de sorte qu'elle puisse venir appuyer à plat contre la face d'extrémité libre d'une autre partie de moule, lesdits moyens d'alignement comprenant au moins deux nervures (16, 17 ; 59, 60) qui sont alignées l'une avec l'autre et s'étendent perpendiculairement et radialement par rapport à l'axe vertical (7) dans un plan, et lesquelles nervures sont connectées d'une part à ladite partie de moule (33) et connectées d'autre part à un cadre ou moyen de déplacement, lesquelles nervures se terminent au niveau d'une ouverture centrale (19, 29).
